# EUROPEAN PATENT APPLICATION

(11) **EP 4 844 207 A1**
(43) Date of publication of application: **25.11.2026**
(21) Application number: 26177709.8
(22) Date of filing: 08.05.2026
(51) Int. Cl.: F02C 3/22, F02C 7/22, F16L 9/18

(54) **HYDROGEN FUEL CONTAINMENT STRUCTURE IN TURBINE ENGINES**

(30) Priority: 19.05.2025 US 202519212138
(71) Applicant: General Electric Company, Evendale, OH 45215 (US)
(72) Inventor: GLESSNER, John, Evendale, 45241 (US); SMITH, Justin, Evendale, 45241 (US)
(74) Representative: Openshaw & Co.

(57) **Abstract**

A hydrogen fuel containment structure (200) in a turbine engine (10). The hydrogen fuel containment structure (200) includes a plurality of rigid pipe portions (402) at least partially surrounding an inner pipe (201) configured to carry hydrogen fuel (300), and a plurality of couplers (406) distributed along a length of the hydrogen fuel containment structure (200). The plurality of couplers (406) couple the plurality of rigid pipe portions (402) to each other. The plurality of rigid pipe portions (402) are spaced apart radially from the inner pipe (201) by the plurality of couplers (406) to define a sub-compartment (416) therebetween, to prevent potentially leaked hydrogen fuel (300) from the inner pipe (201) from spreading outside of the hydrogen fuel containment structure (200).

## Description

### TECHNICAL FIELD

The present disclosure relates generally to a hydrogen fuel containment structure in turbine engines.

### BACKGROUND

The propulsion system for commercial aircraft typically includes one or more aircraft engines, such as turbine engines. These engines may be powered by aviation turbine fuel, which is, typically, a combustible hydrocarbon liquid fuel, such as a kerosene-type fuel, having a desired carbon number and carbon-to-hydrogen ratio. Such fuel produces carbon dioxide upon combustion, and improvements to reduce or to eliminate such carbon dioxide emissions in commercial aircraft are desired.

### BRIEF DESCRIPTION OF THE DRAWINGS

Features and advantages will be apparent from the following, more particular, description of various embodiments, as illustrated in the accompanying drawings, wherein like reference numbers generally indicate identical, functionally similar, or structurally similar elements, or both.
FIG. 1 is a schematic, cross-sectional diagram of a turbine engine, taken along a longitudinal centerline axis of the turbine engine, according to an embodiment of the present disclosure.
FIG. 2 is a partial, cutaway view of the turbine engine having a fuel pipe, according to an embodiment of the present disclosure.
FIG. 3 is a perspective view of an inner pipe of the fuel pipe shown in FIG. 2, according to an embodiment of the present disclosure.
FIG. 4 is a perspective view of a hydrogen fuel containment structure of the fuel pipe shown in FIG. 2, according to an embodiment of the present disclosure.
FIG. 5 is an elevational, cross-sectional view of the hydrogen fuel containment structure showing the inner pipe, according to an embodiment of the present disclosure.
FIG. 6A is a perspective view of an inner pipe segment of the inner pipe, according to an embodiment of the present disclosure.
FIG. 6B is a schematic cross-sectional view of two inner pipe segments coupled to each other via their respective flanges, according to an embodiment of the present disclosure.
FIG. 6C is a schematic cross-sectional view of two inner pipe segments coupled to each other via their respective flanges and a support wall in the hydrogen containment structure, according to an embodiment of the present disclosure.
FIG. 7 is a perspective view of a clamp configured to couple the inner pipe (e.g., an inner pipe segment) to the hydrogen fuel containment structure via a coupler, according to an embodiment of the present disclosure.
FIG. 8 is a perspective view of the coupler and a rigid pipe portion of the hydrogen fuel containment structure showing how the clamp (shown in FIG. 7) is inserted into the coupler, according to an embodiment of the present disclosure.
FIG. 9 is another perspective view of the coupler and the rigid pipe portion of the hydrogen fuel containment structure showing a cap for sealing an opening of the coupler (shown in FIG. 8), according to an embodiment of the present disclosure.
FIG. 10 is a further perspective view of the coupler and the rigid pipe portion of the hydrogen fuel containment structure showing a position of the clamp within the coupler, according to an embodiment of the present disclosure.
FIG. 11 is an elevational perspective view of the coupler showing a positioning of the clamp within the coupler, according to an embodiment of the present disclosure.
FIG. 12 is another elevational view of the coupler showing the position of the clamp relative to an opening in the coupler, according to an embodiment of the present disclosure.
FIG. 13 is another elevational view of the coupler and the rigid pipe portion of the hydrogen fuel containment structure showing a relative position of an inner pipe segment of the inner pipe and a flange of the inner pipe segment, according to an embodiment of the present disclosure.
FIG. 14 is another elevational view of the coupler showing the position of base extensions of the coupler, according to an embodiment of the present disclosure.
FIG. 15A to 15H show a sequence of a method of manufacturing or assembling the hydrogen fuel containment structure, according to an embodiment of the present disclosure.
FIG. 16 is a perspective view of the hydrogen fuel containment structure showing an elbow fitting connector for connecting to a flange of an inner pipe segment of the inner (shown in FIG. 3), according to an embodiment of the present disclosure.
FIG. 17 is a perspective view of the elbow fitting connector shown in FIG. 16, according to an embodiment of the present disclosure.

### DETAILED DESCRIPTION

Features, advantages, and embodiments of the present disclosure are set forth or apparent from a consideration of the following detailed description, drawings, and claims. Moreover, both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "low" and "high," or their respective comparative degrees (e.g., "lower" and "higher," where applicable), when used with the compressor, turbine, shaft, or spool components, each refers to relative pressures or relative speeds, or both within an engine unless otherwise specified. For example, a "low-speed" component defines a component configured to operate at a rotational speed, such as a maximum allowable rotational speed, which is lower than that of a "high-speed" component of the engine. Alternatively, unless otherwise specified, the aforementioned terms may be understood in their superlative degree. For example, a "low-pressure turbine" may refer to the lowest maximum pressure within a turbine section, and a "high-pressure turbine" may refer to the highest maximum pressure within the turbine section. The terms "low" or "high" in such aforementioned regards may additionally, or alternatively, be understood as relative to minimum allowable speeds or pressures, or minimum or maximum allowable speeds or pressures relative to normal, desired, steady state, etc., operation of the engine, or any combination thereof.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein. Sealing members can be used at one or more of the connected components or features.

The singular forms "a," "an," and "the" include plural references unless the context clearly dictates otherwise.

As used herein, the term "axial" refers to directions and orientations that extend substantially parallel to a longitudinal centerline of the turbine engine. Moreover, the terms "radial" and "radially" refer to directions and orientations that extend substantially perpendicular to the longitudinal centerline of the turbine engine. In addition, as used herein, the term "circumferentially" refers to directions and orientations that extend arcuately about the longitudinal centerline of the turbine engine.

Hydrogen is an alternative fuel in evaluation in the global market to reduce carbon dioxide (CO₂) emissions from aerial and automotive vehicles, gas turbines, and rockets. The existing rocket industry uses hydrogen as a propulsion system, and future commercial and military aviation engine programs are introducing hydrogen in the market.

To reduce carbon dioxide emissions from commercial aircraft, therefore, a hydrogen (H₂) fuel may be used. Hydrogen fuel poses a number of challenges as compared to combustible hydrocarbon liquid fuel. For example, hydrogen fuel has a relatively low boiling point, and, in its gaseous form, hydrogen fuel has a much lower power density than combustible hydrocarbon liquid fuel. Hydrogen fuel, when in a gaseous form, also tends to seep through materials and attachment points between components without leaving residue. Hydrogen fuel is colorless and odorless. Hydrogen fuel is also highly reactive (relative to other fuels, such as Jet-A fuel) with a wide range of flammability limits. Hydrogen (H₂) fuel reacts with oxygen (O₂) to form water (H₂O) in an exothermic chemical reaction.

Hydrogen fuel, therefore, provides a source of clean energy. Hydrogen, however, is a substance that is mostly feared for ignition (e.g., micro flames, deflagration, detonation) when the hydrogen fuel is in contact with high energy sources (e.g., temperature, electrical, kinetic). The hydrogen fuel is more prone to leakage due to its molecular size and more prone to combustion than other liquid fuels, such as kerosene fuel. The hydrogen fuel is generally more difficult to seal due to its small molecular size compared to conventional fuels that have a higher molecular size. In addition, leaks of hydrogen fuel are harder to detect as hydrogen fuel is not visible, and the hydrogen fuel is easier to ignite compared to conventional fuels.

Conventionally, double wall pipes are used to mitigate the risk of hydrogen leakage. However, these double wall pipes have only been proven to be effective in stationary environments. The use of double wall pipes in dynamic environment for aerospace applications, such as in turbine engines where vibration is present, has proven to be challenging. Aircraft engine piping may be prone to failure modes from vibration input that can cause leaks. Conventional commercial use of hydrogen fuel does not encounter vibration.

An aspect of the present disclosure is to provide a containment device around hydrogen fuel pipes that vents hydrogen fuel leaks (from either correctly or incorrectly installed joints) overboard, to prevent ignition from sources near the hydrogen fuel pipes. These sources could be thermal or electrical.

Another aspect is to provide a method of designing and manufacturing a hydrogen fuel containment structure around an inner pipe configured to carry the hydrogen fuel, to provide independent redundancy for leaks caused by multiple failure modes of the hydrogen fuel pipe carrying the hydrogen fuel for additional robustness and safety.

In an embodiment, the hydrogen fuel containment structure is configured to contain leaked hydrogen fuel from misassembled seals in the inner pipe carrying the hydrogen fuel. In an embodiment, the hydrogen fuel containment structure is also configured to contain small inherent hydrogen fuel leaks from properly assembled seals. Hydrogen fuel is never, however, completely sealed. Therefore, there always exists at least a minute amount of hydrogen fuel leakage. In an embodiment, the hydrogen fuel containment structure is further configured to contain leaks due to high cycle fatigue (HCF) failure in pipes induced by HCF engine vibration.

In an embodiment, the hydrogen fuel containment structure is also configured to contain leaks of hydrogen fuels from over pressure failures (e.g., accidental over pressurized hydrogen fuel within the inner pipe carrying the hydrogen fuel). In an embodiment, the hydrogen fuel containment structure is also configured to contain leaks of hydrogen fuel at relatively high pressure as well as, potentially, a hydrogen explosion.

In an embodiment, the hydrogen fuel containment structure has parts that can be manufactured conventionally with robust known processes. In an embodiment, the method of designing and manufacturing a hydrogen fuel containment structure includes sequential assembling of the hydrogen fuel containment structure around the inner pipe. The inner pipe can be an inner rigid pipe or an inner flexible pipe. The hydrogen fuel containment structure can also be at least partially rigid or at least partially flexible.

In an embodiment, the hydrogen fuel containment structure can be configured to vent leaked or leaking hydrogen fuel overboard. In an embodiment, the hydrogen fuel containment structure can be configured to introduce purge gas (e.g., nitrogen or an inert gas) into a space between the hydrogen fuel containment structure (e.g., an outer pipe) and the inner pipe carrying the hydrogen fuel. The flow of purge gas can be modulated or temperature controlled to prevent ice formation around the inner pipe, the outer pipe, or both. A hydrogen sensor can also be provided in the space between the hydrogen fuel containment structure (e.g., an outer pipe) and the inner pipe carrying the hydrogen fuel to detect leaked hydrogen fuel.

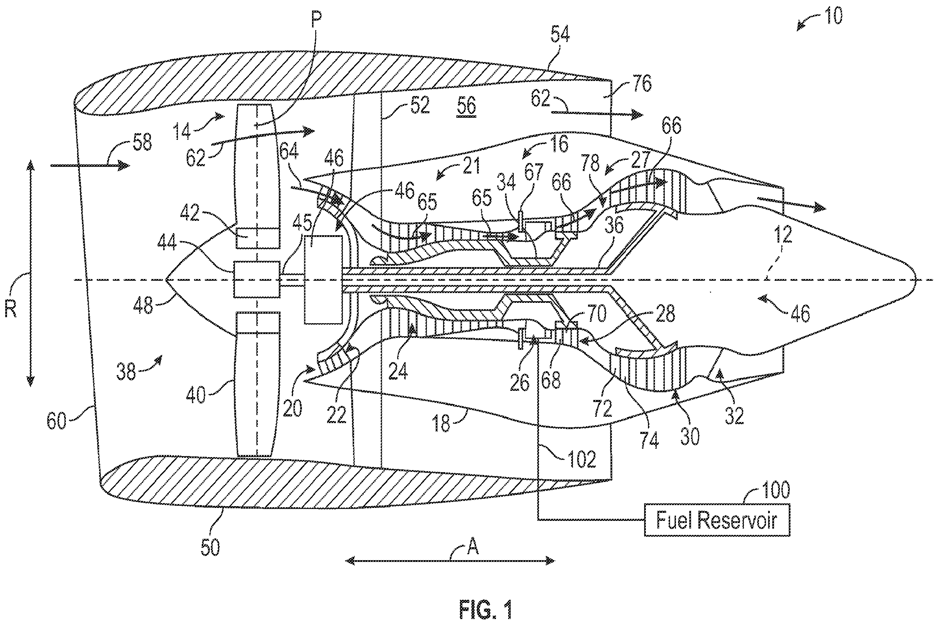

Referring now to the drawings, FIG. 1 is a schematic, cross-sectional diagram of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 depicted in FIG. 1 generally includes an outer casing 18 (or a nacelle surface) that is substantially tubular and defines an annular inlet 20. As schematically shown in FIG. 1, the outer casing 18 encases, in serial flow relationship, a compressor section 21 including a booster or a low-pressure (LP) compressor 22 followed downstream by a high-pressure (HP) compressor 24, a combustion section 26, a turbine section 27 including a high-pressure (HP) turbine 28 followed downstream by a low-pressure (LP) turbine 30, and a jet exhaust nozzle section 32. A high-pressure (HP) shaft 34 or a spool drivingly connects the HP turbine 28 to the HP compressor 24, to rotate the HP turbine 28 and the HP compressor 24 in unison. A low-pressure (LP) shaft 36 or a spool drivingly connects the LP turbine 30 to the LP compressor 22, to rotate the LP turbine 30 and the LP compressor 22 in unison. The compressor section 21, the combustion section 26, the turbine section 27, and the jet exhaust nozzle section 32 together define a core air flowpath.

For the embodiment depicted in FIG. 1, the fan section 14 includes a fan 38 (e.g., a variable pitch fan) having a plurality of fan blades 40 (airfoils) coupled to a disk 42 in a spaced apart manner. As depicted in FIG. 1, the fan blades 40 extend outwardly from the disk 42 generally along the radial direction R. In an embodiment, each fan blade 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft 45 that is powered by the LP shaft 36 across a power gearbox, also referred to as a gearbox assembly 46. In another embodiment, the actuation member 44 may not be provided. The gearbox assembly 46 is shown schematically in FIG. 1. The gearbox assembly 46 includes a plurality of gears for adjusting the rotational speed of the fan shaft 45 and, thus, the fan 38 relative to the LP shaft 36. In other embodiments, the gearbox 46 may not be used, in which case the fan shaft 45 is directly powered by the LP shaft 36.

Referring still to the embodiment of FIG. 1, the disk 42 is covered by a rotatable fan hub 48 aerodynamically contoured to promote an airflow through the plurality of fan blades 40. In addition, the fan section 14 includes an annular fan casing or a nacelle 50 that circumferentially surrounds the fan 38 or at least a portion of the turbo-engine 16, or both. The nacelle 50 is supported relative to the turbo-engine 16 by a plurality of circumferentially spaced outlet guide vanes 52 (stator airfoils). Moreover, a downstream section 54 of the nacelle 50 extends over an outer portion of the turbo-engine 16 to define a bypass airflow passage 56 therebetween.

During operation of the turbine engine 10, a volume of air 58 enters the turbine engine 10 through an inlet 60 of the nacelle 50 or the fan section 14, or both. As the volume of air 58 passes across the fan blades 40 (rotating airfoils), a first portion of air 62 is directed or routed into the bypass airflow passage 56, and a second portion of air 64 is directed or is routed into the upstream section of the core air flowpath, or, more specifically, into the annular inlet 20 of the LP compressor 22. The ratio between the first portion of air 62 and the second portion of air 64 is commonly known as a bypass ratio. The pressure of the second portion of air 64 is then increased, forming compressed air 65, and the compressed air 65 is routed through the HP compressor 24 and into the combustion section 26, where the compressed air 65 is mixed with fuel and burned to generate combustion gases 66. The fuel can be a hydrogen fuel. The fuel can be transported from a fuel reservoir 100 using a fuel pipe 102 to the combustion section 26.

The combustion gases 66 are routed into the HP turbine 28 and expanded through the HP turbine 28 where a portion of thermal energy or kinetic energy, or both, from the combustion gases 66 is extracted via sequential stages of HP turbine stator vanes 68 (stator airfoils) that are coupled to the outer casing 18 and HP turbine rotor blades 70 (rotating airfoils) that are coupled to the HP shaft 34, thus, causing the HP shaft 34 to rotate, thereby supporting operation of the HP compressor 24. The combustion gases 66 are then routed into the LP turbine 30 and expanded through the LP turbine 30. Here, a second portion of the thermal energy and the kinetic energy is extracted from the combustion gases 66 via sequential stages of LP turbine stator vanes 72 (stator airfoils) that are coupled to the outer casing 18 and LP turbine rotor blades 74 (rotating airfoils) that are coupled to the LP shaft 36, thus, causing the LP shaft 36 to rotate, supporting operation of the LP compressor 22 and rotation of the fan 38 via the gearbox assembly 46.

The combustion gases 66 are subsequently routed through the jet exhaust nozzle section 32 of the turbo-engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the turbo-engine 16.

The turbine engine 10 depicted in FIG. 1 is by way of example only. In other embodiments, the turbine engine 10 may have any other suitable configuration. For example, in other embodiments, the fan 38 may be configured in any other suitable manner (e.g., as a fixed pitch fan) and further may be supported using any other suitable fan frame configuration. Moreover, in other embodiments, any other suitable number or configuration of compressors, turbines, shafts, or a combination thereof may be provided. In still other embodiments, aspects of the present disclosure may be incorporated into any other suitable turbine engine, such as, for example, turbofan engines, propfan engines, turbojet engines, turboprop, or turboshaft engines. In some embodiments, a gearbox or a gear system may not be used in the turbine engine 10.

The turbine engine 10 discussed herein is suitable for use on aircraft. Suitable aircraft include, for example, airplanes and unmanned aerial vehicles (UAV). In other embodiments, the turbine engine can be any other turbine engine, such as an industrial turbine engine incorporated into a power generation system, or a nautical turbine engine on a ship or other vessel.

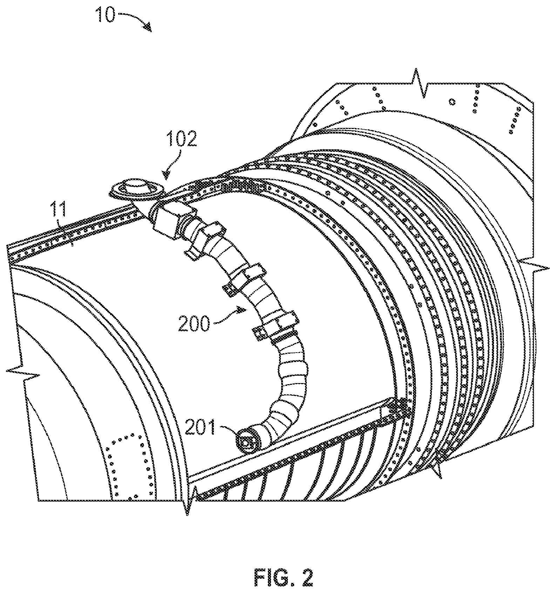

FIG. 2 is a partial, cutaway view of the turbine engine 10 having a fuel pipe 102, according to an embodiment of the present disclosure. The fuel pipe 102 is used to carry or to transport hydrogen fuel from the fuel reservoir 100 (shown in FIG. 1) to the combustion section 26 (shown in FIG. 1). The fuel pipe 102 includes a hydrogen fuel containment structure 200 (e.g., an outer pipe) surrounding at least partially an inner pipe 201 configured to carry the hydrogen fuel. The fuel pipe 102, including the hydrogen fuel containment structure 200, can be mounted to a surface 11 of the turbine engine 10 or another surface or another component of the turbine engine 10. The hydrogen fuel containment structure 200 provided around the inner pipe 201 can prevent hydrogen that may leak from the inner pipe to leak outside the fuel pipe 102 to prevent ignition from sources (e.g., a thermal source or an electrical source) near the hydrogen fuel pipe 102. For example, the hydrogen fuel containment structure 200 around an inner pipe 201 is configured to contain leaked hydrogen fuel from misassembled seals in the inner pipe 201 carrying the hydrogen fuel. The hydrogen fuel containment structure 200 can also be configured to contain small inherent hydrogen fuel leaks from properly assembled seals or to contain leaks due to high cycle fatigue (HCF) failure in pipes induced by HCF engine vibration. The hydrogen fuel containment structure 200 can also be configured to contain leaks of hydrogen fuels from over pressure failures (e.g., accidental over pressurized hydrogen fuel within the inner pipe carrying the hydrogen fuel) and to contain leaks of hydrogen fuel at relatively high pressure as well as, potentially, a hydrogen explosion.

The hydrogen fuel containment structure 200 can also be configured to vent leaked or leaking hydrogen fuel overboard. For example, the hydrogen fuel containment structure 200 can be configured to introduce purge gas (e.g., nitrogen or an inert gas) into a space between the hydrogen fuel containment structure 200 and the inner pipe 201 carrying the hydrogen fuel. The flow of purge gas can be modulated or temperature controlled to prevent ice formation around the inner pipe 201, the hydrogen fuel containment structure 200 (e.g., an outer pipe), or both. A hydrogen sensor can also be provided in the space between the hydrogen fuel containment structure 200 (e.g., an outer pipe) and the inner pipe 201 carrying the hydrogen fuel to detect leaked hydrogen fuel.

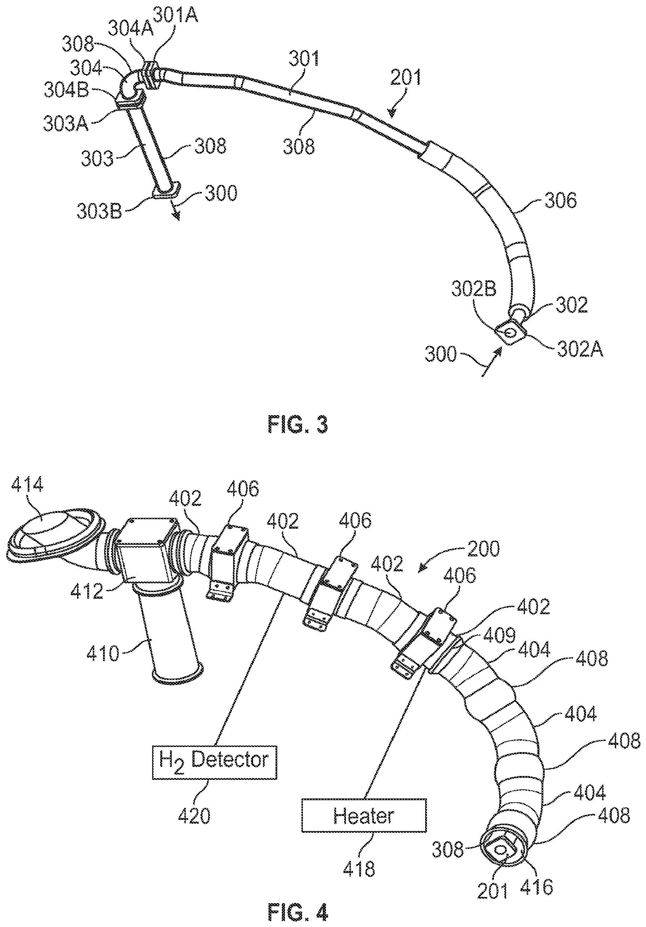

FIG. 3 is a perspective view of the inner pipe 201, according to an embodiment of the present disclosure. The inner pipe 201 is configured to carry or to transport hydrogen fuel 300, for example, from the fuel reservoir 100 (shown in FIG. 1) to the combustion section 26 (shown in FIG. 1). The inner pipe 201 may include a plurality of inner pipe segments 301, 302, 303, and 304. In an embodiment, one or more of the plurality of inner pipe segments 301, 302, 303, and 304 can be curved. For example, as shown in FIG. 3, the inner pipe segment 304 is curved. In an embodiment, one or more of the plurality of inner pipe segments 301, 302, 303, and 304 terminate with flanges. For example, inner pipe segment 302 terminates by a flange 302A, inner pipe segment 301 terminates by a flange 301A, inner pipe segment 303 terminates by flanges 303A and 303B, and inner pipe segment 304 terminates by flanges 304A and 304B. The flange 302A has a port 302B for introducing the hydrogen fuel 300. The flanges are used to connect the plurality of inner pipe segments to each other. In an embodiment, the inner pipe 201 can be a single wall pipe. The inner pipe 201 can be at least partially rigid or at least partially flexible. In an embodiment, at least a portion of the inner pipe 201 can also be a flexible tube or be surrounded by a flexible tube 306. In an embodiment, a diameter of the inner pipe 201 can be around one inch, for example. In addition to flanges 304A and 304B, the inner pipe segments 301, 302, 303, and 304 can be connected by other types of mechanical fluid fittings or welding or brazing.

FIG. 4 is a perspective view of the hydrogen fuel containment structure 200, according to an embodiment of the present disclosure. The hydrogen fuel containment structure 200 surround the inner pipe 201 (shown in FIG. 3). In an embodiment, as shown in FIG. 4, the hydrogen fuel containment structure 200 includes rigid pipe portions 402 and flexible pipe portions 404. Th rigid pipe portions 402 are coupled to each other in series. The flexible pipe portions 404 are coupled to each other in series. At least one of the flexible pipe portions 404 is coupled to at least one of the rigid pipe portions 402. In an embodiment, the hydrogen fuel containment structure 200 includes a plurality of couplers 406 distributed along a length of the hydrogen fuel containment structure 200. The plurality of couplers 406 are configured to couple the plurality of rigid pipe portions 402 to each other. In an embodiment, the hydrogen fuel containment structure 200 includes a plurality of ball joints 408 (e.g., flexible bellows ball joints). The plurality of ball joints 408 are configured to couple the plurality of flexible pipe portions 404 to each other. In an embodiment, the hydrogen fuel containment structure 200 includes a V-band connection 409 to connect one of the plurality of rigid pipe portions 402 to one of the plurality of flexible pipe portions 404. In an embodiment, the hydrogen fuel containment structure 200 also includes an outer duct 410 and a connector 412 (e.g., a T-connector). The connector 412 is configured to connect the outer duct 410 to one of the plurality of rigid pipe portions 402. In an embodiment, the hydrogen fuel containment structure 200 also includes a vent duct 414. The connector 412 is further configured to connect the vent duct 414 to one of the plurality of rigid pipe portions 402 and to the outer duct 410. The vent duct 414 is configured to vent leaked hydrogen fuel. In an embodiment, a diameter of the hydrogen fuel containment structure 200 is about 3.5 inches, for example.

In an embodiment, the hydrogen fuel containment structure 200 surrounds the inner pipe 201. The plurality of rigid pipe portions 402 and the plurality of flexible pipe portion 404 of the hydrogen fuel containment structure 200 are spaced apart radially from the inner pipe 201 by the plurality of couplers 406 to define a sub-compartment 416 therebetween, to prevent potentially leaked hydrogen fuel from the inner pipe 201 to spread outside of the hydrogen fuel containment structure 200. A leakage of hydrogen fuel may occur. As a result, a portion of the hydrogen fuel may leak into the gap or the sub-compartment 416 between the inner pipe 201 and the hydrogen fuel containment structure 200. To avoid accumulation of leaked hydrogen fuel within the gap or the sub-compartment 416 between the inner pipe 201 and the hydrogen fuel containment structure 200, the leaked hydrogen fuel can be vented through the vent duct 414. For example, gas (e.g., air, nitrogen, or an inert gas) can be introduced into the sub-compartment 416 to evacuate the leaked hydrogen fuel.

In an embodiment, an ice mitigation component 308 (shown in FIG. 3 and FIG. 4) can be provided to prevent accumulation of ice on the inner pipe 201, the hydrogen fuel containment structure 200, or both. The ice mitigation component 308 can be, for example, an insulation layer or a coating. The insulation layer or the coating can be provided on a surface of the inner pipe 201 (as shown in FIG. 3) or on the hydrogen fuel containment structure 200 (as shown in FIG. 4). In an embodiment, the hydrogen fuel containment structure 200 may include the ice mitigation component 308, such as an insulation layer, coating, or a controlled thermal heater, or any combination thereof. In an embodiment, a heater 418 may also be used to heat an interior surface or an exterior surface of the hydrogen fuel containment structure 200 or to heat an exterior surface of the inner pipe 201, to prevent accumulation of ice on the exterior surface of the hydrogen fuel containment structure 200 or on the exterior surface of the inner pipe 201.

In an embodiment, a hydrogen fuel detector 420 can be placed in the gap or the sub-compartment 416 between the hydrogen fuel containment structure 200 and the inner pipe 201. The hydrogen fuel detector 420 can be configured to detect an amount of hydrogen fuel that may potentially leak into the sub-compartment 416. For example, a warning signal can be transmitted by the hydrogen fuel detector 420 to indicate and to warn of an excessive amount of hydrogen leakage accumulating within the sub-compartment 416.

In an embodiment, the hydrogen fuel containment structure 200 is configured to contain leaked hydrogen fuel from misassembled seals in the inner pipe 201. The seals may be misassembled (or misaligned) due to vibrations in the turbine engine or due to high cycle fatigue (HCF) failure in pipes, etc. In an embodiment, the hydrogen fuel containment structure 200 is also configured to contain small hydrogen fuel leaks that result even from properly assembled seals. Hydrogen fuel cannot be completely sealed. Therefore, there always exists at least a minute amount of hydrogen fuel leakage. In an embodiment, the hydrogen fuel containment structure 200 is further configured to contain leaks due to high cycle fatigue (HCF) failure in pipes induced by HCF engine vibration.

In an embodiment, the hydrogen fuel containment structure 200 is also configured to contain leaks of hydrogen fuels from over pressure failures (e.g., accidental over pressurized hydrogen fuel within the inner pipe carrying the hydrogen fuel). In an embodiment, the hydrogen fuel containment structure 200 is also configured to contain leaks of hydrogen fuel at relatively high pressure as well as, potentially, a hydrogen explosion.

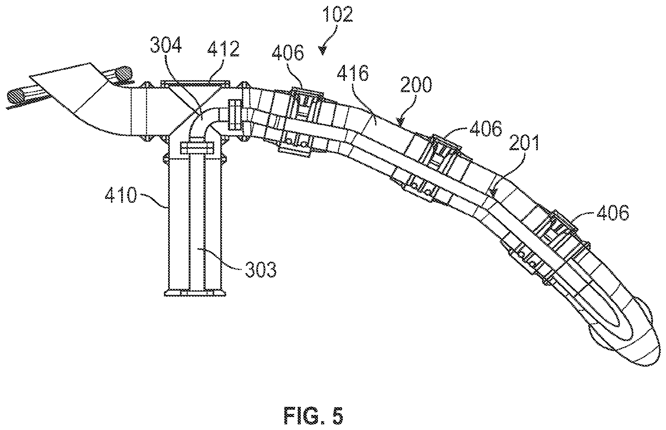

FIG. 5 is an elevational, cross-sectional view of the hydrogen fuel containment structure 200 of the fuel pipe 102 showing the inner pipe 201, according to an embodiment of the present disclosure. As shown in FIG. 5, the hydrogen fuel containment structure 200 surrounds the inner pipe 201. The hydrogen fuel containment structure 200 is spaced apart radially from the inner pipe 201 by a gap to define a sub-compartment 416 therebetween, to prevent potentially leaked hydrogen fuel from the inner pipe 201 to spread outside of the hydrogen fuel containment structure 200 and, thus, outside of outside of the fuel pipe 102. As shown in FIG. 5, the inner pipe segment 303 is contained within the outer duct 410. The inner pipe segment 304 is contained within the connector 412. The one or more inner pipe segments 301 are contained within the plurality of rigid pipe portions 402. The inner pipe segment 302 is contained within flexible pipe portions 404.

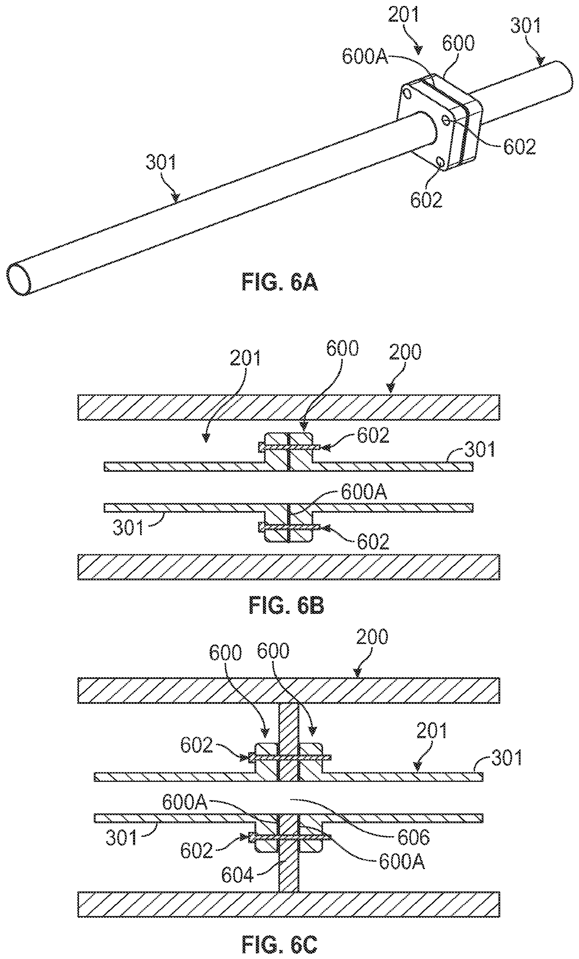

FIG. 6A is a perspective view of the inner pipe segment 301 of the inner pipe 201 of the fuel pipe 102, according to an embodiment of the present disclosure. As shown in FIG. 6, the inner pipe 201 includes flanges 600. Each flange 600 is provided at an end of the inner pipe segment 301 of the inner pipe 201. For example, one flange 600 of one inner pipe segment 301 can be connected to another flange 600 of another inner pipe segment 301. A seal joint or seal member 600A can be provided between the flanges 600 to seal the joint between two flanges 600. A plurality of fasteners 602 can be used to fasten the flange 600 of one inner pipe segment 301 to a flange 600 of another inner pipe segment 301.

FIG. 6B is a schematic cross-sectional view of two inner pipe segments 301 coupled to each other via their respective flanges 600, according to an embodiment of the present disclosure. As shown in FIG. 6B, the plurality of fasteners (e.g., screws) can be used to fasten the flange 600 of one inner segment 301 to a flange 600 of another inner pipe segment 301. In an embodiment, as shown in FIG. 6B, the flanges 600 of the inner pipe segments 301 are configured (e.g. sized) to not touch the hydrogen fuel containment structure 200 so as to decouple vibration of the inner pipe 201 from the hydrogen containment structure 200. In this way, potential vibration of the inner pipe 201 is not transmitted into the hydrogen containment structure and/or potential vibration of the hydrogen containment structure is not transmitted to the inner pipe 201.

FIG. 6C is a schematic cross-sectional view of two inner pipe segments 301 coupled to each other via their respective flanges 600 and a support wall 604 in the hydrogen containment structure 200, according to an embodiment of the present disclosure. As shown in FIG. 6C, the hydrogen containment structure 200 may be provided with a support wall 604. In an embodiment, the support wall 604 can be from a material selected for dampening vibration. As shown in FIG. 6C, the flange 600 of one inner pipe segment 301 is connected to one side of the support wall 604 and the flange 600 of another inner pipe segment 301 is connected to an opposite side of the support wall 604. The support wall 604 has a hole 606 for hydrogen fuel flow communication from one inner pipe segment 301 to another inner pipe segment 301.

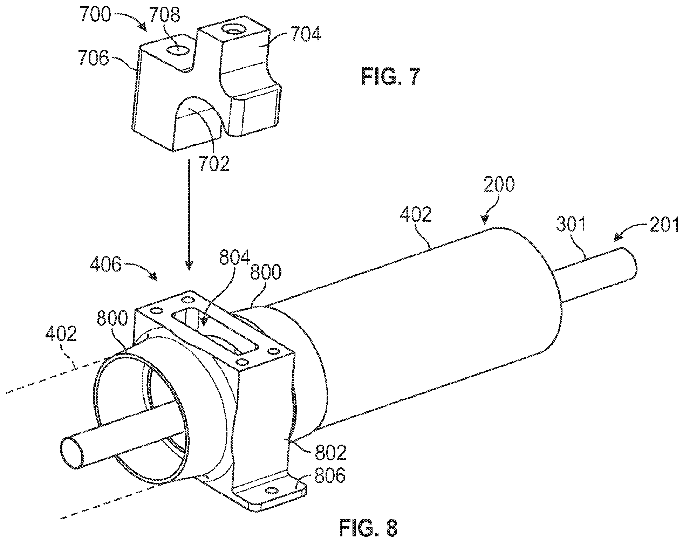

FIG. 7 is a perspective view of a clamp 700 configured to couple the inner pipe 201 (e.g., the inner pipe segment 301) to the hydrogen fuel containment structure via the coupler 406, according to an embodiment of the present disclosure. As shown in FIG. 7, the clamp 700 has a round inner surface 702 adapted to mate with the inner pipe 201 (e.g., the inner pipe segment 301), to couple the inner pipe 201 to the coupler 406. The clamp 700 also includes a protrusion 704 that is provided to help hold the clamp 700 during installation. The clamp 700 also includes a shoulder 706 that is configured to contact the coupler 406. A hole 708 is provided in the shoulder 706 to receive a fastener, such as a screw (not shown), to couple the clamp 700 to the coupler 406.

FIG. 8 is a perspective view of the coupler 406 and the rigid pipe portion 402 of the hydrogen fuel containment structure 200 showing how the clamp 700 (shown in FIG. 7) is inserted into the coupler 406, according to an embodiment of the present disclosure. As shown in FIG. 8, the coupler 406 is configured to couple the plurality of rigid pipe portions 402 to each other. The coupler 402 has two cylindrical end portions 800 configured to couple to the plurality of rigid pipe portions 402 of the hydrogen fuel containment structure 200. The coupler 406 also as a mid-portion 802 between the two cylindrical end portions 800. The mid-portion 802 of the coupler 406 has an opening 804 (e.g., a slot) configured to receive the clamp 700 (shown in FIG. 7) to couple the inner pipe 201 (e.g., inner pipe segment 301) to the coupler 406. The coupler 406 also has base extensions 806 for mounting the coupler 406 to the surface 11 of the turbine engine 10 (shown in FIG. 2), for example.

In an embodiment, the clamp 700 is used to attach to mid-portion 802. This supports the inner tube 301 without connecting the inner tube 301 to the rigid pipe portions 402 of the hydrogen fuel containment structure 200 with spacers (or other devices). This provides vibration independence of the inner tube 301 relative to the rigid pipe portions 402 of the hydrogen fuel containment structure 200 decoupling their individual vibration responses. Consequently, a failure of the inner tube 301 would not propagate to the rigid pipe portions 402 of the hydrogen fuel containment structure 200, or vice-versa.

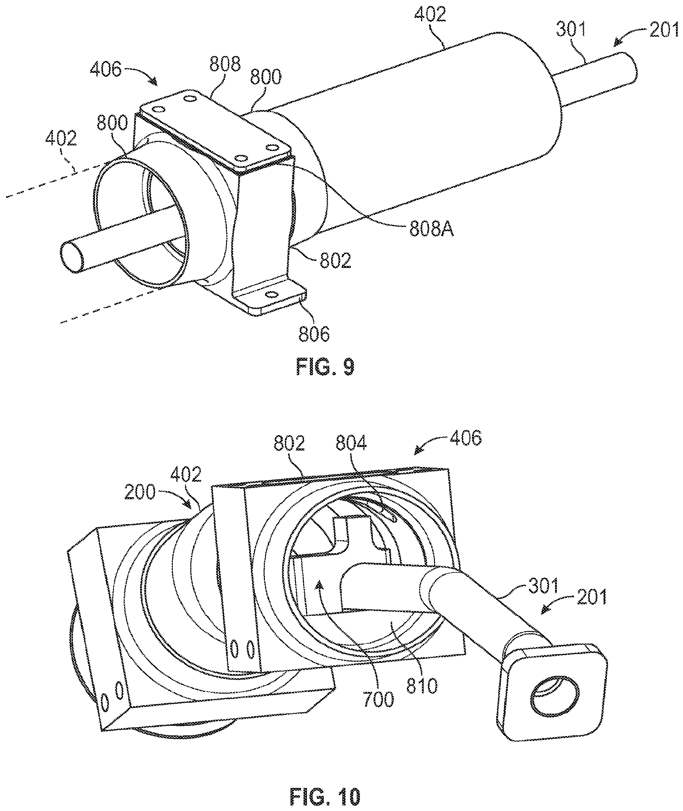

FIG. 9 is another perspective view of the coupler 406 and the rigid pipe portion 402 of the hydrogen fuel containment structure 200 showing a cap 808 for sealing the opening 804 (shown in FIG. 8) of the coupler 406, according to an embodiment of the present disclosure. As shown in FIG. 9, the coupler 406 also includes a cap 808. The cap 808 is configured to seal the opening 804 (shown in FIG. 8) provided in the mid-portion 802 of the coupler 406. A seal member 808A is provided between the cap 808 and the opening 804. After inserting the clamp 700 through the opening 804, the opening is closed and sealed, so that leaked hydrogen that may be present in the gap between the sub-compartment between the hydrogen fuel containment structure 200 and the inner pipe 201 does not escape through the opening 804 (shown in FIG. 8).

FIG. 10 is a further perspective view of the coupler 406 and the rigid pipe portion 402 of the hydrogen fuel containment structure 200, showing a position of clamp 700 within the coupler 406, according to an embodiment of the present disclosure. As shown in FIG. 10, the coupler 406 includes a seat 810 provided inside the mid-portion 802 of the coupler 406. The seat 810 is configured to receive and to position the clamp 700 within the mid-portion 802 of the coupler 406, so that the clamp 700 couples the inner pipe 201 to coupler 406.

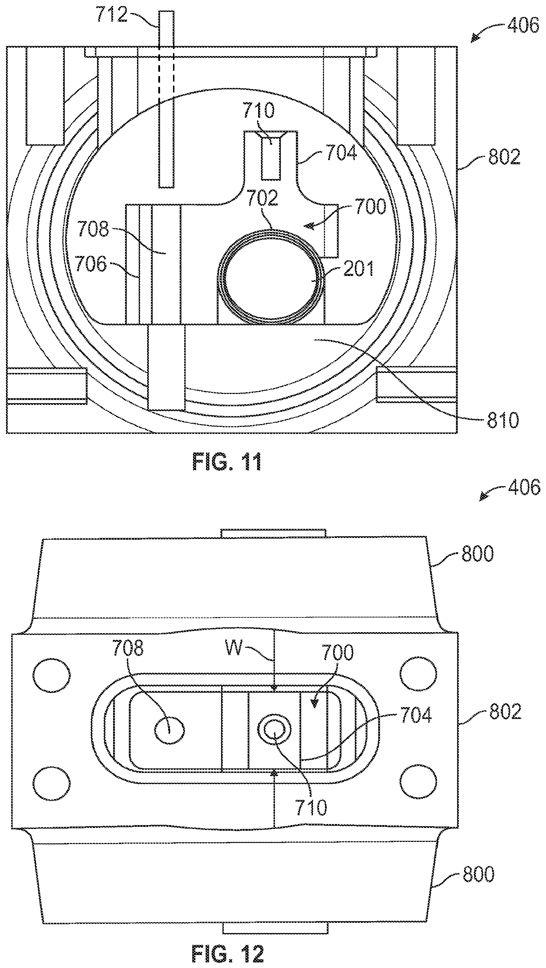

FIG. 11 is an elevational view of the coupler 406 showing a positioning of the clamp 700 within the coupler 406, according to an embodiment of the present disclosure. The clamp 700 has a round inner surface 702 adapted to mate with the inner pipe 201 (e.g., the inner pipe segment 301) to couple the inner pipe 201 to the coupler 406. The clamp 700 also includes a protrusion 704 that is provided to help hold the clamp 700 during installation. The protrusion 704 has a hole 710 for receiving a tool to guide and to insert the clamp 700 through the opening 804 (shown in FIG. 8). The clamp 700 also includes a shoulder 706 that is configured to contact the coupler 406. The hole 708 provided in the shoulder 706 is configured to receive a fastener such as a screw (not shown), to attach the clamp 700 to the coupler 406 using a tool 712. The tool 712 can be inserted through the opening 804 (shown in FIG. 8).

FIG. 12 is another elevational view of the coupler 406 showing the position of the clamp 700 relative to the opening 804 in the coupler 406, according to an embodiment of the present disclosure. As shown in FIG. 12, a width of the opening 804 in the coupler 406 can be selected so as to be slightly greater than a width W of the clamp, to allow insertion of the clamp 700. The hole 710 provided in the shoulder 706 can be used to insert a tool therein to guide and to insert the clamp 700 during installation.

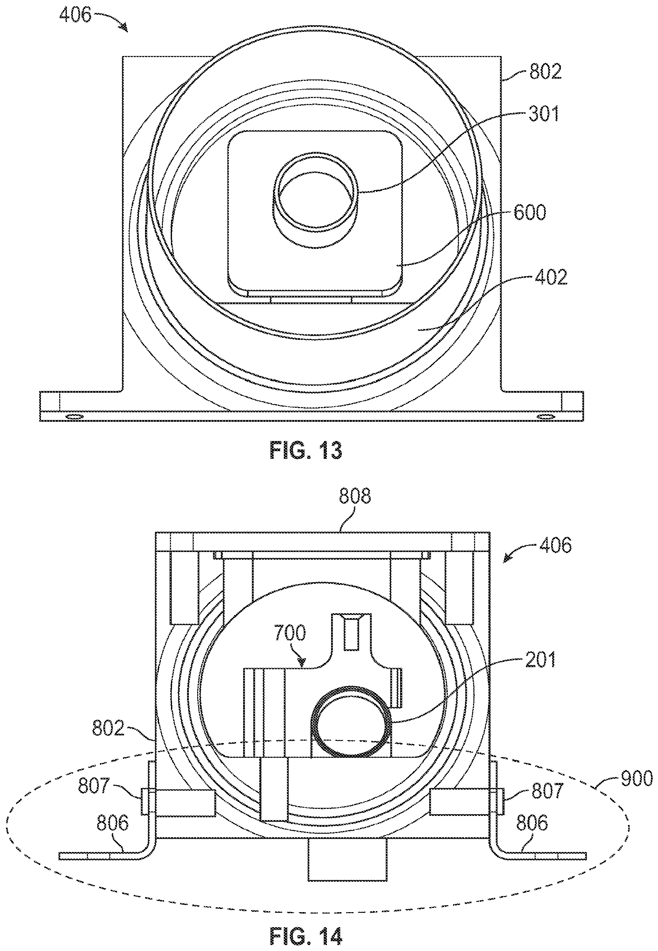

FIG. 13 is another elevational view of the coupler 406 and the rigid pipe portion 402 of the hydrogen fuel containment structure 200 showing a relative position of the inner pipe segment 301 of the inner pipe 201 and the flange 600, according to an embodiment of the present disclosure. In this embodiment, flange 600 is shown not touching the hydrogen fuel containment structure 200. This allows to prevent vibration to be transmitted between the inner pipe 201 and the hydrogen fuel containment structure 200. As a result, vibration modes of the inner pipe 201 and vibration modes of the hydrogen fuel containment structure 200 are independent or decoupled.

FIG. 14 is another elevational view of the coupler 406 showing the position of the base extensions 806, according to an embodiment of the present disclosure. As shown in FIG. 14, the base extensions 806 (e.g., brackets) are connected to the mid-portion 802 of the coupler 406. For example, in the embodiment shown in FIG. 14, fasteners 807 can be used to couple the base extensions 806 (e.g., brackets) to a mid-portion 802 of the coupler 406. In another embodiment, as shown, for example, in FIG. 9, the base extensions 806 can be integrally formed with the mid-portion 802. The base extensions 806 can have an L-shape. The base extensions 806 are configured to mount the coupler 406 to the surface 11 of the turbine engine 10 (shown in FIG. 2) or another surface in the turbine engine 10. Therefore, both the hydrogen fuel containment structure 200 and the inner pipe 201 are supported by the base extensions 806. As shown in FIG. 14, the area delimited by a dotted line 900 corresponds to the area that supports both the hydrogen fuel containment structure 200 and the inner pipe 201. As a result, vibration modes of the inner tube segments 301 are independent of the vibration modes of the rigid pipe portions 402 of the hydrogen fuel containment structure 200.

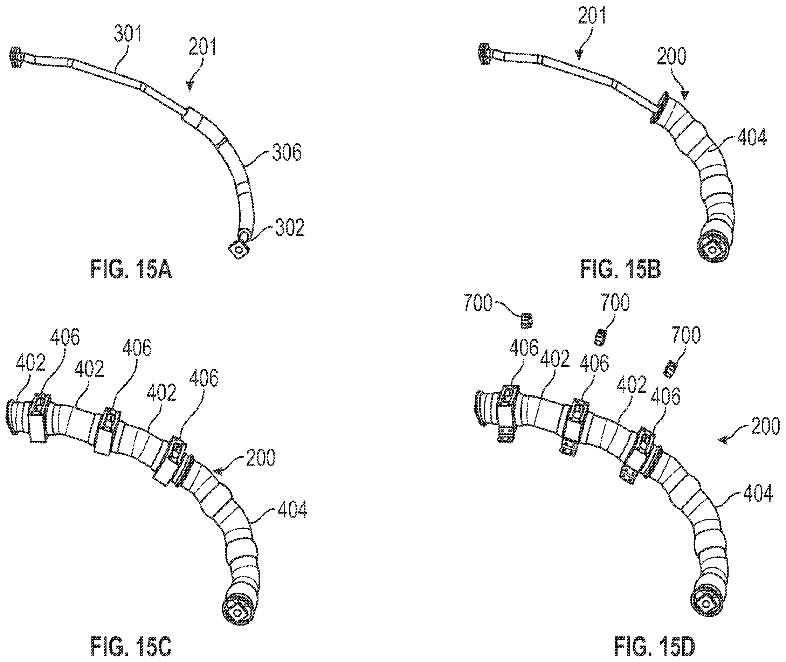

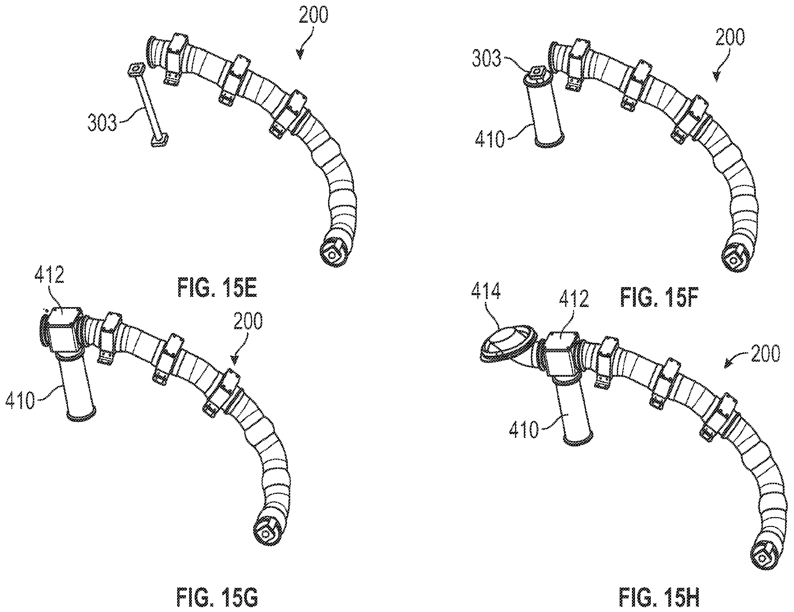

FIG. 15A to 15H show a sequence of a method of manufacturing the hydrogen fuel containment structure 200, according to an embodiment of the present disclosure. The method starts by providing the inner pipe 201, as shown in FIG. 15A. Next, the plurality of flexible pipe portions 404 of the hydrogen fuel containment structure 200 are inserted around at least a portion of the inner pipe 201 that is surrounded by the flexible tube 306, as shown in FIG. 15B. The plurality of rigid pipe portions 402 are then mounted to each other using the plurality of couplers 406 and then inserted around the inner pipe 201, as shown in FIG. 15C. At least one of the plurality of rigid pipe portions 402 is coupled to at least one of the plurality of flexible pipe portions 404, as shown in FIG. 15C. Subsequently, the plurality of clamps 700 are inserted into the plurality of couplers 406, to couple the inner pipe 201 to the plurality of couplers 406, as shown in FIG. 15D. The straight inner pipe segment 303 is then brought next to the already mounted inner pipe 201, as shown in FIG. 15E. The straight inner pipe segment 303 is inserted into the outer duct 410, as shown in FIG. 15F. The inner pipe segment 304 that is curved (e.g., an elbow segment) is connected to the inner pipe segment 301 of the inner pipe 201 that is previously within the hydrogen fuel containment structure 200. The connector 412 is inserted around the inner pipe segment 304 that is curved. The connector 412 is connected to the outer duct 410. The straight inner pipe segment 303 is then connected to the inner pipe segment 304 that is curved, as shown FIG. 15G. The vent duct 414 is connected the connector 412, as shown in FIG. 15H.

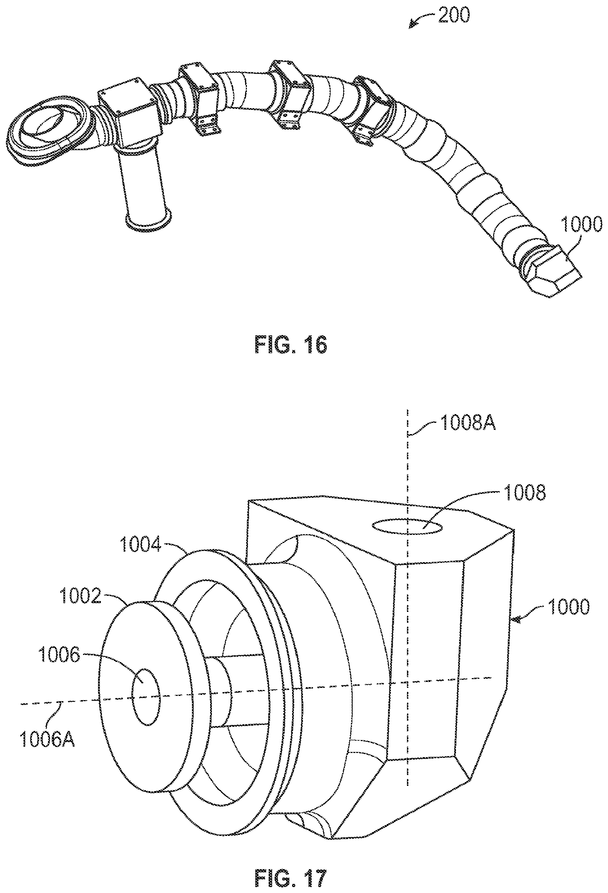

FIG. 16 is a perspective view of the hydrogen fuel containment structure 200 showing an elbow fitting connector 1000 for connecting the elbow fitting connector 1000 to flange 302A of the inner pipe segment 302 of the inner pipe 201 (shown in FIG. 3), according to an embodiment of the present disclosure. As shown in FIG. 16, the elbow fitting connector 1000 is also connected to a flexible pipe portion 404 of the hydrogen fuel containment structure 200. The elbow fitting connector 1000 provides the ability to reorient the port 302B (shown in FIG. 3) in the flange 302A (shown in FIG. 3) for connection to another component of the turbine engine 10.

FIG. 17 is a perspective view of the elbow fitting connector 1000 shown in FIG. 16, according to an embodiment of the present disclosure. As shown in FIG. 17, the elbow fitting connector 1000 has a first flange 1002 and a second flange 1004. The first flange 1002 and the second flange 1004 are staggered. The first flange 1002 is configured to contact the flange 302A (shown in FIG. 3). The second flange 1004 is configured to contact an end of one of the plurality of flexible pipe portions 404 of the hydrogen fuel containment structure 200. The staggered configuration of the first flange 1002 and the second flange 1004 of the elbow fitting connector 1000 allows connecting the elbow fitting connector 1000 to the flange 302A, while the flange 302A is being recessed relative to the end of the of the plurality of flexible pipe portions 404. The port 302B (shown in FIG. 3) in the flange 302A is aligned with a hole 1006 in the elbow fitting connector 1000. The elbow fitting connector 1000 has another hole 1008 that communicates with the hole 1006. A normal axis 1006A to the hole 1006 and a normal axis 1008A to the hole 1008 define an angle less than hundred and eighty degrees (180°), for example, about ninety degrees (90°).

In an embodiment, the hydrogen fuel containment structure is configured to contain leaked hydrogen fuel from misassembled seals in the inner pipe carrying the hydrogen fuel. In an embodiment, the hydrogen fuel containment structure is also configured to contain small inherent hydrogen fuel leaks from properly assembled seals. Hydrogen fuel is never, however, completely sealed. Therefore, there always exists at least a minute amount of hydrogen fuel leakage. In an embodiment, the hydrogen fuel containment structure is further configured to contain leaks due to high cycle fatigue (HCF) failure in pipes induced by HCF engine vibration.

In an embodiment, the hydrogen fuel containment structure is also configured to contain leaks of hydrogen fuels from over pressure failures (e.g., accidental over pressurized hydrogen fuel within the inner pipe carrying the hydrogen fuel). In an embodiment, the hydrogen fuel containment structure is also configured to contain leaks of hydrogen fuel at relatively high pressure as well as, potentially, a hydrogen explosion.

In an embodiment, the hydrogen fuel containment structure has parts that can be manufactured conventionally with robust known processes such as additive manufacturing. In an embodiment, the method of designing and manufacturing a hydrogen fuel containment structure includes sequential assembling of the hydrogen fuel containment structure around the inner pipe. The inner pipe can be an inner rigid pipe or an inner flexible pipe. The hydrogen fuel containment structure can also be at least partially rigid or at least partially flexible.

In an embodiment, the hydrogen fuel containment structure can be configured to vent leaked or leaking hydrogen fuel overboard. In an embodiment, the hydrogen fuel containment structure can be configured to introduce purge gas (e.g., nitrogen or an inert gas) into a space between the hydrogen fuel containment structure (e.g., an outer pipe) and the inner pipe carrying the hydrogen fuel. The flow of purge gas can be modulated or temperature controlled to prevent ice formation around the inner pipe, the outer pipe, or both. A hydrogen sensor can also be provided in the space between the hydrogen fuel containment structure (e.g., an outer pipe) and the inner pipe carrying the hydrogen fuel to detect leaked hydrogen fuel.

In an embodiment, the hydrogen fuel containment structure is configured to contain leaked hydrogen fuel from misassembled seals in the inner pipe carrying the hydrogen fuel due to vibrations during operation of the turbine engine. In an embodiment, the hydrogen fuel containment structure is also configured to contain small inherent hydrogen fuel leaks from properly assembled seals. Hydrogen fuel, due in part to its small molecular size, is never, however, completely sealed. Therefore, there always exists at least a minute amount of hydrogen fuel leakage. In an embodiment, the hydrogen fuel containment structure is further configured to contain leaks due to high cycle fatigue (HCF) failure in pipes induced by HCF engine vibration.

In an embodiment, the hydrogen fuel containment structure is also configured to contain leaks of hydrogen fuels from over pressure failures (e.g., accidental over pressurized hydrogen fuel within the inner pipe carrying the hydrogen fuel). In an embodiment, the hydrogen fuel containment structure is also configured to contain leaks of hydrogen fuel at relatively high pressure as well as, potentially, a hydrogen explosion.

In an embodiment, the hydrogen fuel containment structure has parts that can be manufactured conventionally with robust known processes such using additive manufacturing. In an embodiment, the method of designing and manufacturing a hydrogen fuel containment structure includes sequential assembling of the hydrogen fuel containment structure around the inner pipe. The inner pipe can be an inner rigid pipe or an inner flexible pipe. The hydrogen fuel containment structure can also be at least partially rigid or at least partially flexible.

Further aspects are provided by the subject matter of the following clauses.

A hydrogen fuel containment structure in a turbine engine. The hydrogen fuel containment structure includes a plurality of rigid pipe portions at least partially surrounding an inner pipe configured to carry hydrogen fuel, and a plurality of couplers distributed along a length of the hydrogen fuel containment structure, the plurality of couplers being configured to couple the plurality of rigid pipe portions to each other. The plurality of rigid pipe portions are spaced apart radially from the inner pipe by the plurality of couplers to define a sub-compartment therebetween, to prevent potentially leaked hydrogen fuel from the inner pipe to spread outside of the hydrogen fuel containment structure.

The hydrogen fuel containment structure of the preceding clause, wherein the inner pipe is a single wall pipe.

The hydrogen fuel containment structure of any preceding clause, wherein at least a portion of the inner pipe is a flexible tube surrounded by flexible pipe portions of the hydrogen fuel containment structure.

The hydrogen fuel containment structure of any preceding clause, further including a hydrogen fuel detector placed in the sub-compartment between the inner pipe and the hydrogen fuel containment structure, the hydrogen fuel detector configured to detect an amount of the hydrogen fuel that potentially leaked into the sub-compartment.

The hydrogen fuel containment structure of any preceding clause, wherein the inner pipe includes a plurality of inner pipe segments.

The hydrogen fuel containment structure of any preceding clause, wherein one or more of the plurality of inner pipe segments terminates with a flange (or other fluid connection fitting) and at least one of the plurality of inner pipe segments includes a port to introduce the hydrogen fuel.

The hydrogen fuel containment structure of any preceding clause, further including a plurality of flexible pipe portions, and a plurality of ball joints (e.g., flexible bellows ball joints) configured to couple the plurality of flexible pipe portions.

The hydrogen fuel containment structure of any preceding clause, further including a V-band connection (or other fluid connectors such as flanges) configured to connect one of the plurality of rigid pipe portions to one of the plurality of flexible pipe portions.

The hydrogen fuel containment structure of any preceding clause, further including an outer duct, and a connector configured to connect the outer duct to one of the plurality of rigid pipe portions.

The hydrogen fuel containment structure of any preceding clause, further including a vent duct connected to the connector, the vent duct being configured to vent the potentially leaked hydrogen fuel.

The hydrogen fuel containment structure of any preceding clause, further including an ice mitigation component to prevent accumulation of ice on the hydrogen fuel containment structure.

The hydrogen fuel containment structure of any preceding clause, wherein the ice mitigation component includes a heater configured to heat an interior surface or an exterior surface of the hydrogen fuel containment structure.

The hydrogen fuel containment structure of any preceding clause, further including a clamp having a round inner surface adapted to mate with the inner pipe, to couple the inner pipe to a coupler of the plurality of couplers.

The hydrogen fuel containment structure of any preceding clause, wherein the clamp includes a protrusion configured to hold the clamp during installation of the clamp.

The hydrogen fuel containment structure of any preceding clause, wherein the clamp includes a shoulder configured to contact the coupler, the shoulder including a hole configured to receive a fastener to couple the clamp to the coupler.

The hydrogen fuel containment structure of any preceding clause, wherein the clamp includes a P-clamp or a U-shaped strap clamp, with one or more bolts.

The hydrogen fuel containment structure of any preceding clause, wherein each of the plurality of couplers has two cylindrical end portions configured to couple to the plurality of rigid pipe portions.

The hydrogen fuel containment structure of any preceding clause, wherein each of the plurality of couplers includes a mid-portion between the two cylindrical end portions, the mid-portion having an opening configured to receive a clamp to couple the inner pipe to the plurality of couplers.

The hydrogen fuel containment structure of any preceding clause, wherein each of the plurality of couplers includes base extensions configured to mount the coupler to a surface of the turbine engine.

The hydrogen fuel containment structure of any preceding clause, wherein each of the plurality of couplers includes a cap configured to close and to seal the opening in the mid-portion.

The hydrogen fuel containment structure of any preceding clause, wherein each of the plurality of couplers includes a seat provided inside the mid-portion, the seat being configured to receive and to position the clamp within the mid-portion.

A turbine engine having a hydrogen fuel pipe. The hydrogen fuel pipe includes an inner pipe configured to carry hydrogen fuel, and a hydrogen fuel containment structure including a plurality of rigid pipe portions at least partially surrounding the inner pipe, and a plurality of couplers distributed along a length of the hydrogen fuel containment structure, the plurality of couplers being configured to couple the plurality of rigid pipe portions to each other. The plurality of rigid pipe portions are spaced apart radially from the inner pipe by the plurality of couplers to define a sub-compartment therebetween, to prevent potentially leaked hydrogen fuel from the inner pipe to spread outside of the hydrogen fuel containment structure.

A method of assembly and manufacturing a hydrogen containment structure around an inner pipe. The method includes (a) providing the inner pipe, the inner pipe being configured to carry hydrogen fuel, (b) inserting flexible pipe portions of a hydrogen fuel containment structure around at least a portion of the inner pipe, (c) mounting a plurality of rigid pipe portions to each other using a plurality of couplers, (d) inserting the plurality of rigid pipe portions around the inner pipe, (e) coupling at least one of the plurality of rigid pipe portions to at least one of the plurality of flexible pipe portions, and (f) inserting a plurality of clamps into the plurality of couplers to couple the inner pipe to the plurality of couplers.

The method of the preceding clause, further including (g) inserting a straight inner pipe segment into an outer duct of the hydrogen fuel containment structure.

The method of any preceding clause, further including (h) connecting a curved inner pipe segment to one of the inner pipes.

The method of any preceding clause, further including (i) inserting a connector around the curved inner pipe segment and connecting the connector to the outer duct.

The method of any preceding clause, further including (j) connecting the straight inner pipe segment to the curved inner pipe segment.

The method of any preceding clause, further including (k) connecting a vent duct to the connector to provide the hydrogen containment structure around the inner pipe.

A hydrogen fuel containment structure in a turbine engine, the hydrogen fuel containment structure comprising: a plurality of rigid pipe portions at least partially surrounding an inner pipe configured to carry hydrogen fuel; and a plurality of couplers distributed along a length of the hydrogen fuel containment structure, the plurality of couplers coupling the plurality of rigid pipe portions to each other, wherein the plurality of rigid pipe portions are spaced apart radially from the inner pipe by the plurality of couplers to define a sub-compartment therebetween, to prevent potentially leaked hydrogen fuel from the inner pipe from spreading outside of the hydrogen fuel containment structure.

The hydrogen fuel containment structure of any preceding clause, further comprising the inner pipe, wherein at least a portion of the inner pipe is a flexible tube surrounded by flexible pipe portions of the hydrogen fuel containment structure.

The hydrogen fuel containment structure of any preceding clause, further comprising a hydrogen fuel detector placed in the sub-compartment between the inner pipe and the hydrogen fuel containment structure, the hydrogen fuel detector configured to detect an amount of the hydrogen fuel that potentially leaked into the sub-compartment.

The hydrogen fuel containment structure of any preceding clause, further comprising an ice mitigation component to prevent accumulation of ice on the hydrogen fuel containment structure.

The hydrogen fuel containment structure of any preceding clause, further comprising the inner pipe, wherein the inner pipe comprises a plurality of inner pipe segments.

The hydrogen fuel containment structure of any preceding clause, wherein one or more of the plurality of inner pipe segments terminates with a flange and at least one of the plurality of inner pipe segments comprises a port to introduce the hydrogen fuel.

The hydrogen fuel containment structure of any preceding clause, further comprising a plurality of flexible pipe portions, and a plurality of ball joints configured to couple the plurality of flexible pipe portions, at least one of the plurality of flexible pipe portions is coupled to at least one of the plurality of rigid pipe portions.

The hydrogen fuel containment structure of any preceding clause, further comprising a V-band connection configured to connect one of the plurality of rigid pipe portions to one of the plurality of flexible pipe portions.

The hydrogen fuel containment structure of any preceding clause, further comprising an outer duct, and a connector configured to connect the outer duct to one of the plurality of rigid pipe portions.

The hydrogen fuel containment structure of any preceding clause, further comprising a vent duct connected to the connector, the vent duct being configured to vent the potentially leaked hydrogen fuel.

The hydrogen fuel containment structure of any preceding clause, further comprising a clamp having a round inner surface adapted to mate with the inner pipe, to couple the inner pipe to a first coupler of the plurality of couplers.

The hydrogen fuel containment structure of any preceding clause, wherein the clamp comprises a protrusion configured to hold the clamp during installation of the clamp.

The hydrogen fuel containment structure of any preceding clause, wherein the clamp comprises a shoulder configured to contact the first coupler, the shoulder comprising a hole configured to receive a fastener to couple the clamp to the first coupler.

The hydrogen fuel containment structure of any preceding clause, wherein each of the plurality of couplers has two cylindrical end portions configured to couple to the plurality of rigid pipe portions.

The hydrogen fuel containment structure of any preceding clause, wherein each of the plurality of couplers comprises a mid-portion between the two cylindrical end portions, the mid-portion having an opening configured to receive a clamp to couple the inner pipe to the plurality of couplers.

The hydrogen fuel containment structure of any preceding clause, wherein each of the plurality of couplers comprises a cap configured to close and to seal the opening in the mid-portion.

The hydrogen fuel containment structure of any preceding clause, wherein each of the plurality of couplers comprises base extensions configured to mount one or more of the plurality of couplers to a surface of the turbine engine.

The hydrogen fuel containment structure of any preceding clause, wherein each of the plurality of couplers comprises a seat provided inside the mid-portion, the seat being configured to receive and to position the clamp within the mid-portion.

A turbine engine comprising a hydrogen fuel pipe, the hydrogen fuel pipe comprising: an inner pipe configured to carry hydrogen fuel; and a hydrogen fuel containment structure comprising: a plurality of rigid pipe portions at least partially surrounding the inner pipe; and a plurality of couplers distributed along a length of the hydrogen fuel containment structure, the plurality of couplers coupling the plurality of rigid pipe portions to each other, wherein the plurality of rigid pipe portions are spaced apart radially from the inner pipe by the plurality of couplers to define a sub-compartment therebetween, to prevent potentially leaked hydrogen fuel from the inner pipe from spreading outside of the hydrogen fuel containment structure.

A method of assembly and manufacturing a hydrogen containment structure around an inner pipe, the method comprising: providing the inner pipe, the inner pipe being configured to carry hydrogen fuel; inserting flexible pipe portions of a hydrogen fuel containment structure around at least a portion of the inner pipe; mounting a plurality of rigid pipe portions to each other using a plurality of couplers; inserting the plurality of rigid pipe portions around the inner pipe; coupling at least one of the plurality of rigid pipe portions to at least one of the plurality of flexible pipe portions; and inserting a plurality of clamps into the plurality of couplers to couple the inner pipe to the plurality of couplers.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A hydrogen fuel containment structure (200) in a turbine engine (10), the hydrogen fuel containment structure (200) comprising:
a plurality of rigid pipe portions (402) at least partially surrounding an inner pipe (201) configured to carry hydrogen fuel (300); and
a plurality of couplers (406) distributed along a length of the hydrogen fuel containment structure (200), the plurality of couplers (406) coupling the plurality of rigid pipe portions (402) to each other,
wherein the plurality of rigid pipe portions (402) are spaced apart radially from the inner pipe (201) by the plurality of couplers (406) to define a sub-compartment (416) therebetween, to prevent potentially leaked hydrogen fuel (300) from the inner pipe (201) from spreading outside of the hydrogen fuel containment structure (200).

2. The hydrogen fuel containment structure (200) of claim 1, further comprising the inner pipe, wherein at least a portion of the inner pipe (201) is a flexible tube (306) surrounded by flexible pipe portions (404) of the hydrogen fuel containment structure (200).

3. The hydrogen fuel containment structure (200) of any preceding claim, further comprising a hydrogen fuel detector (420) placed in the sub-compartment (416) between the inner pipe (201) and the hydrogen fuel containment structure (200), the hydrogen fuel detector (420) configured to detect an amount of the hydrogen fuel (300) that potentially leaked into the sub-compartment (416).

4. The hydrogen fuel containment structure (200) of any preceding claim, further comprising the inner pipe, wherein the inner pipe (201) comprises a plurality of inner pipe segments (301, 302, 303, 304), and, optionally, one or more of the plurality of inner pipe segments (301, 302, 303, 304) terminates with a flange (301A, 302A, 303A, 303B, 304A, 304B, 600) and at least one of the plurality of inner pipe segments (301, 302, 303, 304) comprises a port (302B) to introduce the hydrogen fuel (300).

5. The hydrogen fuel containment structure (200) of any preceding claim, further comprising a plurality of flexible pipe portions (404), and a plurality of ball joints (408) configured to couple the plurality of flexible pipe portions (404), at least one of the plurality of flexible pipe portions (402) is coupled to at least one of the plurality of rigid pipe portions (402), and, optionally, a V-band connection (409) configured to connect one of the plurality of rigid pipe portions (402) to one of the plurality of flexible pipe portions (404).

6. The hydrogen fuel containment structure (200) of any preceding claim, further comprising an outer duct (410), and a connector (412) configured to connect the outer duct (410) to one of the plurality of rigid pipe portions (402), and, optionally, a vent duct (414) connected to the connector (412), the vent duct (414) being configured to vent the potentially leaked hydrogen fuel (300).

7. The hydrogen fuel containment structure (200) of any preceding claim, further comprising an ice mitigation component (308) to prevent accumulation of ice on the hydrogen fuel containment structure (200).

8. The hydrogen fuel containment structure (200) of any preceding claim, further comprising a clamp (700) having a round inner surface (702) adapted to mate with the inner pipe (201), to couple the inner pipe (201) to a first coupler (406) of the plurality of couplers (406), and, optionally, the clamp (700) comprises a protrusion (704) configured to hold the clamp (700) during installation of the clamp (700), and, optionally, the clamp (700) comprises a shoulder (706) configured to contact the first coupler (406), the shoulder (706) comprising a hole (708) configured to receive a fastener to couple the clamp (700) to the first coupler (406).

9. The hydrogen fuel containment structure (200) of any preceding claim, wherein each of the plurality of couplers (406) has two cylindrical end portions (800) configured to couple to the plurality of rigid pipe portions (402).

10. The hydrogen fuel containment structure (200) of claim 9, wherein each of the plurality of couplers (406) comprises a mid-portion (802) between the two cylindrical end portions (800), the mid-portion (802) having an opening (804) configured to receive a clamp (700) to couple the inner pipe (201) to the plurality of couplers (406).

11. The hydrogen fuel containment structure (200) of claim 10, wherein each of the plurality of couplers (406) comprises a cap (808) configured to close and to seal the opening (804) in the mid-portion (802).

12. The hydrogen fuel containment structure (200) of claim 10, wherein each of the plurality of couplers (406) comprises base extensions (806) configured to mount one or more of the plurality of couplers (406) to a surface of the turbine engine (10).

13. The hydrogen fuel containment structure (200) of claim 10, wherein each of the plurality of couplers (406) comprises a seat (810) provided inside the mid-portion (802), the seat (810) being configured to receive and to position the clamp (700) within the mid-portion (802).

14. A turbine engine (10) comprising a hydrogen fuel pipe, the hydrogen fuel pipe comprising an inner pipe (201) configured to carry hydrogen fuel (300), and the hydrogen fuel containment structure (200) of any preceding claim.

15. A method of assembly and manufacturing the hydrogen containment structure (200) of any of claim 1 through claim 13 around an inner pipe (201) configured to carry hydrogen fuel (300), the method comprising:
inserting flexible pipe portions (404) of the hydrogen fuel containment structure (200) around at least a portion of the inner pipe (201);
mounting a plurality of rigid pipe portions (402) to each other using a plurality of couplers (406);
inserting the plurality of rigid pipe portions (402) around the inner pipe (201);
coupling at least one of the plurality of rigid pipe portions (402) to at least one of the plurality of flexible pipe portions (404); and
inserting a plurality of clamps (700) into the plurality of couplers (406) to couple the inner pipe (201) to the plurality of couplers (406).
